# EUROPEAN PATENT APPLICATION

(11) **EP 3 617 973 A1**
(43) Date of publication of application: **04.03.2020**
(21) Application number: 19195243.1
(22) Date of filing: 03.09.2019
(51) Int. Cl.: G06Q 20/04, G06Q 20/32, G06Q 20/38, G07B 15/00, G07C 9/00

(54) **ELECTRONIC TICKET ADMISSION VERIFICATION ANTI-COUNTERFEITING SYSTEM AND METHOD THEREOF**

(30) Priority: 03.09.2018 TW 107130848
(71) Applicant: OQR Ticket Co., Ltd., 104 Taipei City (TW)
(72) Inventor: Tseng, Yin-Hung, 104 Taipei City (TW); Lin, Chun-Ming, 104 Taipei City (TW); Liu, Sheng-Chang, 104 Taipei City (TW); Wang, Jan-Hui, 104 Taipei City (TW); Cho, Ying-Chiang, 104 Taipei City (TW)
(74) Representative: Lang, Christian

(57) **Abstract**

An electronic ticket admission verification anti-counterfeiting system includes a ticket database for storing a ticket identifier to be downloaded and stored to a user-end device including a display screen and a sound receiving device; at least one admission determination device including a sound broadcasting device and a barcode reader for sequentially scanning a the first QR code and a second QR code displayed on the display screen. When analyzing that the first QR code is valid, the admission determination device controls the sound broadcasting device to broadcast a notification sound, and then analyzes the second QR code to determine whether to admit the user holding the user-end device. The first or second QR code is associated with the encrypted ticket identifier, and the second QR code is generated after the notification sound is received. The first QR code is different from the second QR code.

## Description

### BACKGROUND OF THE INVENTION

### 1. Field of the Invention

The present invention relates to verification system and method, and more particularly to an electronic ticket admission verification anti-counterfeiting system which is able to broadcast sound to enable two verification processes.

### 2. Description of the Related Art

The popularity of the Internet has made transactions between client ends and server ends increasingly frequent. According to a conventional technology, the client end can register and log in the server end for a transaction procedure of ticket purchase; however, in the conventional technology, the transaction is about the payment operation only, and the physical ticket is still delivered to the consumer through a conventional manner, such as home delivery or convenience store pick-up, or the consumer is required to receive the physical ticket at a designated window according to an ID card thereof in 30 minutes before admission. Therefore, the conventional technology cannot avoid or reduce the cost of producing physical tickets and the cost of logistic delivery.

Taiwan invention patent No. 1474706, discloses an electronic voucher anti-counterfeiting system and a method thereof based on a variable anti-counterfeit voucher. After a detecting unit detects that the electronic device receives a confirmation instruction, the variable anti-counterfeit voucher is processed and changed by a processing unit to generate an identification notification for a user to verify the electronic voucher. The confirmation indication can include one of a gesture, a voice, a task, a password, or a combination thereof. This conventional technology provides a solution for a mobile end only, and the mobile end is notified by human voice or gesture; however, during the confirmation process based on human voice in admission verification environment, a volume of the human voice varies and is possibly affected by surrounding environment, and ambient sound is more noisy especially at the entrance, and in the case, when the staff or the user does not speak clearly or the volume thereof is too small, the detection unit cannot clearly receive the confirmation indication of the human voice, the staff or the user must input voice again, and it will impact the smoothness of the entire admission verification process. As a result, the conventional technology has the above-mentioned technical problem which remains to be solved. Furthermore, this conventional technology utilizes a time-varying pattern (as shown in FIGS. 5A and 5B of Taiwan invention patent No. 1474706) or a text or number (as shown in FIG. 4 of Taiwan invention patent No. 1474706) to generate a variable anti-counterfeit voucher, and the service staff can verify the voucher by naked eyes based on an appointed pattern, instead of verifying automatically by the system end, so it is easy to cause misjudgment due to human factors. Furthermore, since the conventional technology notifies the user to verify the processed anti-counterfeit voucher or the identification, so it is hard to determine whether the electronic voucher is the original electronic voucher or the recopied electronic voucher. As a result, the possibility of cheating for admission still exists, and there is still room for improvement in verification security.

Therefore, in the application of the admission verification environment, if the indication confirmation can be performed conveniently based on sound without being affected by the ambient sound at the entrance and the volume and the communication range of sound can be accurately controlled, high verification convenience and accuracy and a good user admission experience can be provided, and the existing verification security problem can be solved, thereby improving industrial practicability.

### SUMMARY OF THE INVENTION

An objective of the present invention is to provide an electronic ticket admission verification anti-counterfeiting system and a method which broadcast sound to enable two verification processes, so as to solve the conventional problems and satisfy the requirement in application.

An objective of the present invention is to provide an electronic ticket admission verification anti-counterfeiting system and method in which a user-end device is used as a carrying device for receiving the broadcast sound to enable two verification processes.

In order to achieve the objective, the present invention provides an electronic ticket admission verification anti-counterfeiting system including a ticket database and at least one admission determination device. The ticket database is configured to store at least one ticket identifier to be downloaded and stored to a user-end device comprising a display screen and a sound receiving device. The at least one admission determination device includes a sound broadcasting device and a barcode reader. The barcode reader is configured to sequentially scan a first QR code and a second QR code displayed on the display screen of the user-end device, and when the admission determination device analyzes that the first QR code is valid, the admission determination device controls the sound broadcasting device to broadcast a notification sound, and then analyzes the second QR code to determine whether to admit a user holding the user-end device. The first QR code or the second QR code is associated with the ticket identifier encrypted, and the second QR code is generated after the sound receiving device of the user-end device receives the notification sound, and the first QR code is different from the second QR code.

In order to achieve the objective, the present invention provides an electronic ticket admission validation anti-counterfeiting method including steps of: scanning a first QR code displayed on a display screen of a user-end device; analyzing first information obtained from the first QR code; comparing the first information to information provided by a ticket database, to determine whether to broadcast an audio file to generate a notification sound; scanning a second QR code displayed on the display screen of the user-end device, wherein the second QR code is generated after the sound receiving device of the user-end device receives the notification sound, and the first QR code or the second QR code is associated with a ticket identifier stored in the user-end device; analyzing second information obtained from the second QR code; comparing the second information to information stored in the ticket database, to determine whether to admit a user holding the user-end device..

In order to achieve the objective, the present invention provides an electronic ticket admission validation anti-counterfeiting method applied to a user-end device including a display screen and a sound receiving device, and the method includes steps of: downloading and storing a ticket identifier; according to the ticket identifier, generating a first QR code, and displaying the first QR code on the display screen for the admission determination device to scan and analyze; after the sound receiving device receives a notification sound outside of a human hearing range, generating a second QR code and displaying the second QR code on the display screen for the admission determination device to scan and analyze.

In order to achieve the objective, the present invention provides a user-end device applied to an electronic ticket admission verification, and the user-end device comprises a display screen and a sound receiving device, and also comprises: a login module configured to login a digital ticket issuance system; a ticket download module configured to download a ticket identifier from the digital ticket issuance system, and store the ticket identifier; a barcode generating module configured to generate a first QR code and display the first QR code on the display screen for the admission determination device to scan and analyze; an audio analyzing module configured to receive and analyze a notification sound outside of a human hearing range, so as to notify the barcode generating module, to make the barcode generating module generate and display a second QR code on the display screen for the admission determination device to scan and analyze, wherein the first QR code or the second QR code is associated with the ticket identifier.

According to above-mentioned contents, the electronic ticket admission verification anti-counterfeiting system and the method of the present invention can generate following unexpected effects.

First, by the two-factor verification using different QR codes, even the QR-code1 of the electronic ticket is recopied, the recopied QR-code1 of the electronic ticket still fails to trigger the generation of the new QR-code2 for second verification, so the recopied QR-code1 cannot be verified for admission. Furthermore, during admission verification process, the staff member at the entrance or the user holding the mobile device only observes that the display screen displaying the QR-code 1 of the electronic ticket approaches the admission determination device, but does not know that the admission determination device is performing the two-factor verification, so it is not easily to sense and crack the two-factor verification of the present invention, thereby achieving the effect of high verification security, no cheating chance and fully admission.

Secondly, after the system and method of the present invention determines the QR code of the electronic ticket to be valid, one of the audio files stored in the admission determination device or the verification server is selected to broadcast, and the sound broadcasting device can broadcast the sound outside of the human hearing frequency range, to trigger the second barcode verification, and the staff member at the entrance or the user holding the mobile device does not need to do additional action, so as to provide high verification convenience and good admission experience to the user.

Thirdly, the system and method of the present invention broadcasts audio file to generate the sound different from general speech audio and having the frequency range higher or lower than the human hearing frequency range, and the volume and broadcasting range of the sound can be accurately controlled, for example, the mobile device of the user can receive the broadcast sound only when the mobile device is near the admission determination device or another sound broadcasting device coupled to the admission determination device, so that during admission verification process the mobile device is not affected by various sounds (such as chatting or music) in surrounding environment, and not affected by the factor such as the volume of the sound or far distance, thereby achieving high verification accuracy.

### BRIEF DESCRIPTION OF THE DRAWINGS

The structure, operating principle and effects of the present invention will be described in detail by way of various embodiments which are illustrated in the accompanying drawings.
FIG. 1A is a structural diagram of a first embodiment of an electronic ticket admission verification anti-counterfeiting system of the present invention.
FIG. 1B is a structural diagram of a second embodiment of an electronic ticket admission verification anti-counterfeiting system of the present invention.
FIG. 1C is a structural diagram of a third embodiment of an electronic ticket admission verification anti-counterfeiting system of the present invention.
FIG. 2 is a block diagram of an application (App) used in a user-end device of an electronic ticket admission verification anti-counterfeiting system of the present invention.
FIG. 3 is a block diagram of a system application of an electronic ticket admission verification anti-counterfeiting system of the present invention.
FIG. 4 is a flowchart of an operation performed on a user-end device of the present invention.
FIG. 5 is a flowchart of an electronic ticket admission validation anti-counterfeiting method applied in a system end according to the present invention.
FIG. 6A is a diagram showing a signal transmission flow of a first embodiment of an electronic ticket admission validation anti-counterfeiting method of the present invention.
FIG. 6B is a diagram showing a signal transmission flow of a second embodiment of an electronic ticket admission validation anti-counterfeiting method of the present invention.
FIG. 6C is a diagram showing a signal transmission flow of a third embodiment of an electronic ticket admission validation anti-counterfeiting method of the present invention.

### DETAILED DESCRIPTION OF THE PREFERRED EMBODIMENTS

The following embodiments of the present invention are herein described in detail with reference to the accompanying drawings. These drawings show specific examples of the embodiments of the present invention. These embodiments are provided so that this disclosure will be thorough and complete, and will fully convey the scope of the invention to those skilled in the art. It is to be acknowledged that these embodiments are exemplary implementations and are not to be construed as limiting the scope of the present invention in any way. Further modifications to the disclosed embodiments, as well as other embodiments, are also included within the scope of the appended claims. These embodiments are provided so that this disclosure is thorough and complete, and fully conveys the inventive concept to those skilled in the art. Regarding the drawings, the relative proportions and ratios of elements in the drawings may be exaggerated or diminished in size for the sake of clarity and convenience. Such arbitrary proportions are only illustrative and not limiting in any way. The same reference numbers are used in the drawings and description to refer to the same or like parts.

It is to be acknowledged that although the terms 'first', 'second', 'third', and so on, may be used herein to describe various elements, these elements should not be limited by these terms. These terms are used only for the purpose of distinguishing one component from another component. Thus, a first element discussed herein could be termed a second element without altering the description of the present disclosure. As used herein, the term "or" includes any and all combinations of one or more of the associated listed items.

It will be acknowledged that when an element or layer is referred to as being "on," "connected to" or "coupled to" another element or layer, it can be directly on connected or coupled to the other element or layer, or intervening elements or layers may be present. In contrast, when an element is referred to as being "directly on," "directly connected to" or "directly coupled to" another element or layer, there are no intervening elements or layers present.

In addition, unless explicitly described to the contrary, the word "comprise" and variations such as "comprises" or "comprising", will be acknowledged to imply the inclusion of stated elements but not the exclusion of any other elements.

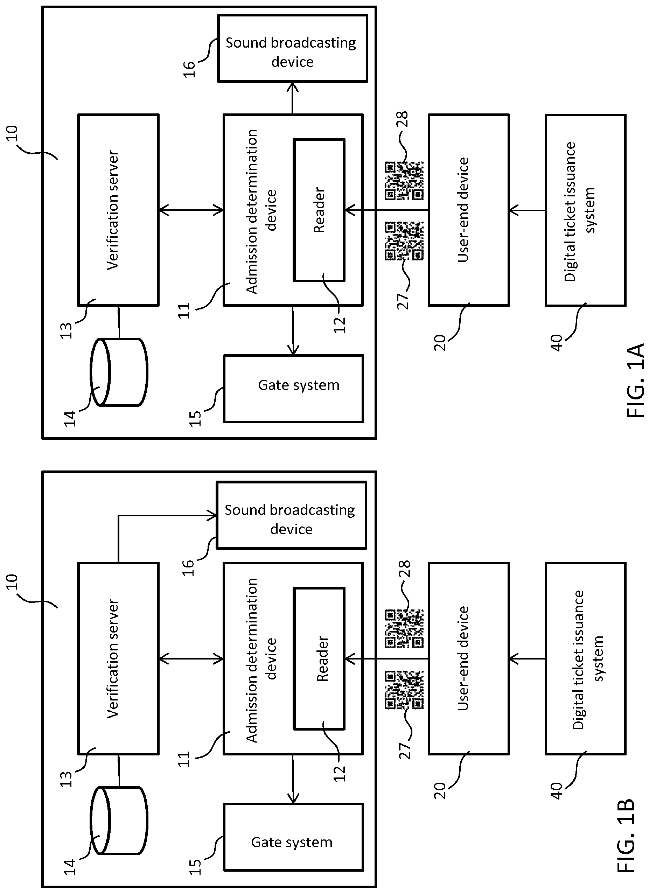

Please refer to FIG. 1A, which is a structural diagram of a first embodiment of an electronic ticket admission verification anti-counterfeiting system of the present invention. In the first embodiment, the electronic ticket admission verification anti-counterfeiting system includes a system end and a client end which are configured to control admission for a user, who holds a user-end device of the present invention, to a site such as a concert, a baseball field, a speech occasion, a museum. In a preferred embodiment of the present invention, when the user reaches an entrance of the site, in the client end of the present invention a user-end device 20 can generate a QR code associated with an electronic ticket in off-line, and display the QR code on a display screen thereof for further admission verification. In the system end of the present invention, an electronic ticket admission verification anti-counterfeiting system 10 includes a ticket database 14, a verification server 13, at least one admission determination device 11, and a gate system 15 and a sound broadcasting device 16 which both are controlled by the admission determination device 11. The admission determination device 11 includes a reader 12 configured to scan a QR code. The admission determination device 11 and the gate system 15 corresponding thereto can be disposed at an entrance of the site to control admission of users. The sound broadcasting device 16 can be disposed out of the admission determination device 11 or disposed in the admission determination device 11.

In the first embodiment of the present invention, the user-end device 20 can be a mobile communication device, such as a smart phone; the user-end device 20 can install and execute an application (App) to login a digital ticket issuance system 40, so as to complete a ticket purchase procedure. Before an activity starts, a user can download an electronic ticket, which is purchased completely, from the digital ticket issuance system 40, and store a ticket identifier of the electronic ticket in the mobile communication device of the client end for anti-counterfeit admission verification process when the activity starts; or, when the user is ready to enter the site, the user can download the electronic ticket from the digital ticket issuance system 40 for anti-counterfeit admission verification process.

When the user reaches the site and uses the user-end device 20 as a carrying device to perform admission verification, the user can click the installed App to start a human-machine interface of the App, and further click an interface option of the admission verification on the human-machine interface. The App can associate with the downloaded and stored ticket identifier to generate a first QR code 27 (QR-code1), which is also called as QR-code1 hereafter, for first verification and display the first QR code 27 (QR-codel) on the display screen of the user-end device 20 for the admission determination device 11 in the system end of the present invention to scan and analyze. Furthermore, in a preferred embodiment of the present invention, the first QR code 27 (QR-codel) displayed by the user-end device 20 is set with timeliness, when the first QR code 27 (QR-codel) is displayed over a setting time, the user-end device 20 re-generates and displays a first QR code, which is also called as QR-code1'. The original first QR code 27 (QR-codel) is different from the re-generated first QR code (QR-code 1'), but they are generated according to the ticket identifier and can be scanned and analyzed by the admission determination device 11. The purpose of setting the timeliness is to prevent the first QR code 27 (QR-codel) from being recopied to illegally use, thereby improving admission verification security.

After the reader 12 of the admission determination device 11 scans and analyzes the first QR code 27 (QR-codel) to obtain first information from the first QR code 27 (QR-code1), the admission determination device 11 transmits the first information to the verification server 13 for first verification. For example, in an embodiment, the first information can include one of a ticket identifier, a user identifier, a time factor or a combination thereof. The verification server 13 obtains the first information from the admission determination device 11, and compares the first information to the information provided by the ticket database 14. The information provided by the ticket database 14 is the information which is obtained by the verification server 13 according to the user identifier for the first comparison, for example, the information can be the ticket identifier stored in the ticket database 14. When the verification server 13 compares the first information obtained from the first QR code 27 (QR-codel) with the information provided by the ticket database 14 and analyzes the first information to be valid, the verification server 13 obtains an audio file from the ticket database 14, and provides the audio file to the admission determination device 11. Next, the admission determination device 11 enables the sound broadcasting device 16 to broadcast the audio file, so as to generate the notification sound. In a preferred embodiment of the present invention, the notification sound is in the frequency range outside of human hearing range.

Please refer to FIGS. 1A and 1B. FIG. 1B shows a structural diagram of a second embodiment of an electronic ticket admission verification anti-counterfeiting system of the present invention. In different embodiments of the present invention, the audio file obtained by the verification server 13 from the ticket database 14 can be a specific audio file or an audio file selected from a plurality of audio files. In a condition that the audio file is the specific audio, after the verification server 13 determines the first QR code 27 (QR-codel) to be valid, the verification server 13 notifies the admission determination device 11 to enable the sound broadcasting device 16 to broadcast the specific audio file, as shown in FIG. 1A, or the verification server 13 directly notifies the sound broadcasting device 16 to broadcast the specific audio file, as shown in FIG. 1B. In a condition that the to-be-broadcast audio file is selected from the plurality of audio files, the verification server 13 can set different selection conditions according to the information related to the electronic ticket, for example, one audio file is used for the same performance or the same seat area. The verification server 13 notifies the admission determination device 11 to enable the sound broadcasting device 16 to broadcast the selected audio file, as shown in FIG. 1A, or the verification server 13 can directly notify the sound broadcasting device 16 to broadcast the selected audio file, as shown in FIG. 1B.

After a sound receiving device, not shown in figures, of the user-end device 20 receives the notification sound broadcast and generated by the sound broadcasting device 16 and the notification sound is determined to be valid, the user-end device 20 starts to generate a second QR code 28 (QR-code2), which associates with the ticket identifier downloaded and stored previously, for second verification, and displays the second QR code 28 (QR-code2) on the display screen of the user-end device 20 for the admission determination device 11 in the system end of the present invention to successively scan and analyze. The first QR code 27 (QR-codel) is different from the second QR code 28 (QR-code2). In a preferred embodiment of the present invention, the second QR code 28 (QR-code2) displayed on the user-end device 20 is also set with timeliness, when the second QR code 28 (QR-code2) is displayed over the setting time, the user-end device 20 regenerates and displays a new second QR code (QR-code_2'), so as to prevent the original second QR code 28 (QR-code2) from being recopied to illegally use, thereby improving admission verification security. After the reader 12 of the admission determination device 11 scans and analyzes the second QR code 28 (QR-code2) to obtain second information, the admission determination device 11 transmits the second information to the verification server 13 for verification. The verification server 13 obtains the second information, such as one of a ticket identifier, a user identifier and a time factor or a combination thereof, from the admission determination device 11, and then compares the second information to the information provided by the ticket database 14. The information provided by the ticket database 14 is the information obtained by the verification server 13 based on the user identifier and for the second comparison, such as the ticket identifier stored in the ticket database 14. When the verification server 13 compares the second information obtained from the second QR code 28 (QR-Code 2) with the information provided by the ticket database 14 and analyzes the second information to be valid, the verification server 13 notifies or transmits a comparison result indicative of successful admission verification, to the admission determination device 11, so that the admission determination device 11 can enable the gate system 15 to admit the user holding the user-end device 20.

In the system and method of the present invention, in order to ensure the successful results of the two verifications, the time for the reader 12 of the admission determination device 11 to read the QR code must be the time of successfully scanning the QR codes for at least two times, so that both of the QR-code1 and the converted QR-code2 displayed on the user-end device 20 can be scanned and analyzed. In order to prevent the user from too early moving the QR code, displayed on the user-end device 20, away from the reader 12 of the admission determination device 11 to cause failure of the second verification, the admission determination device 11 can prompt a countdown time to the user, or prompt the user not to move the QR code displayed on the user-end device 20 away from the reader 12 of the admission determination device 11 until an indicator light is changed from red to green.

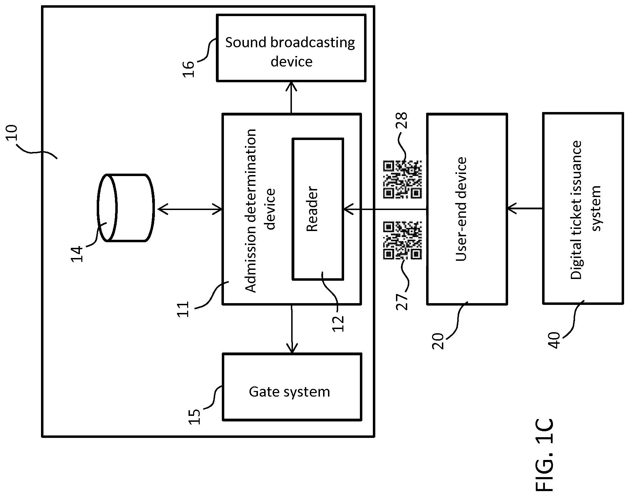

Please refer to FIG. 1C, which is a structural diagram of a third embodiment of an electronic ticket admission verification anti-counterfeiting system of the present invention. The difference between the third embodiment and the first embodiment shown in FIG. 1A is the verification server 13 in the system end. In the third embodiment of the present invention, the electronic ticket admission verification anti-counterfeiting system 10 does not include the verification server 13, and the at least one admission determination device 11 of the third embodiment can perform the verification comparison operation which is originally performed by the verification servers 13 of the first and second embodiments. In the third embodiment of the present invention, the admission determination device 11 can directly access the ticket database 14 based on the user identifier, to obtain the ticket identifier stored after the first verification comparison, the audio file to be broadcast by the sound broadcasting device 16, and the information for the second verification comparison, from the ticket database 14. According to the comparison result between the first and second information obtained by analyzing the first QR code and the second QR code and the information provided by the ticket database, the admission determination device 11 can determine whether to admit the user holding the user-end device.

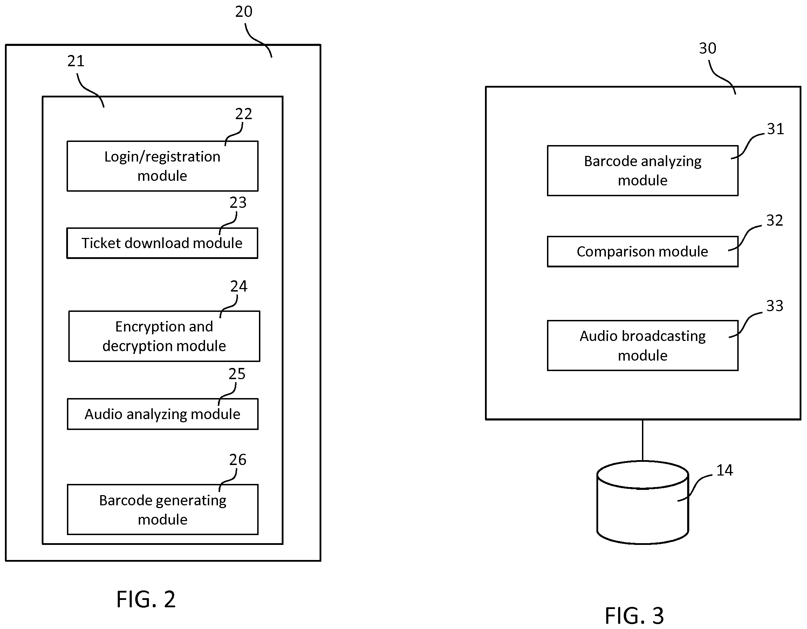

Please refer to FIG. 2, which is a block diagram of an application used in the user-end device of a system of the present invention. In a preferred embodiment, the user-end device 20 can be a smartphone or a tablet computer, such as an iPhone or iPad manufactured by Apple, or a Galaxy phone manufactured by Samsung; the user-end device 20 of the present invention can include a memory, a sound receiving device, a display screen and a human-machine interface, which is not shown in FIG. 2. In a preferred embodiment, the human-machine interface can provide a virtual button displayed on a touch screen, or a Home button of a mobile phone, or a biological recognition interface such as a fingerprint recognition interface (such as Touch ID), a face recognition interface (such as Face ID), an iris recognition interface, or a voiceprint recognition interface. In an embodiment of the present invention, the user-end device 20 can download the ticket identifier from the digital ticket issuance system 40, or a program of generating the first QR code 27 (QR-codel) for first verification, and the first verification can be combined with the biological recognition interface, to improve admission verification security.

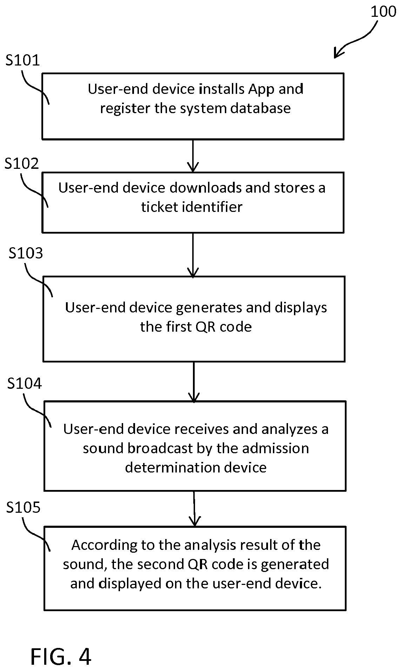

The user-end device 20 of the present invention can execute the application (App) 21 to implement the modules including a login/registration module 22, a ticket download module 23, an encryption and decryption module 24, an audio analyzing module 25, and a barcode generating module 26. The login/registration module 22 is configured to establish communication interconnection between the user-end device 20 and the digital ticket issuance system 40. Please also refer to FIG. 4, which shows a flowchart of an operation of applying the electronic ticket admission verification anti-counterfeiting system to the user-end device 20, according to the present invention. In the client end of the present invention, the method 100 includes following steps S101 to S105. In a step S101, when the user-end device 20 communicates or interconnects with the digital ticket issuance system 40 for the first time, the login/registration module 22 starts a registration procedure; and, in the registration procedure, a user identifier corresponding to the user-end device 20 of the user is assigned to make the user-end device 20 as a valid login carrying device. After the user completes the ticket purchase procedure, the digital ticket issuance system 40 can provide download of an electronic ticket. In a step S102, based on the user identifier, the ticket download module 23 of the user-end device 20 can validly download a ticket identifier of the electronic ticket from the digital ticket issuance system 40, and store the ticket identifier into the memory. Furthermore, the encryption and decryption module 24 can decrypt the ticket identifier of the downloaded electronic ticket, and perform encryption to generate the first and second information of the first and second QR codes 27 and 28.

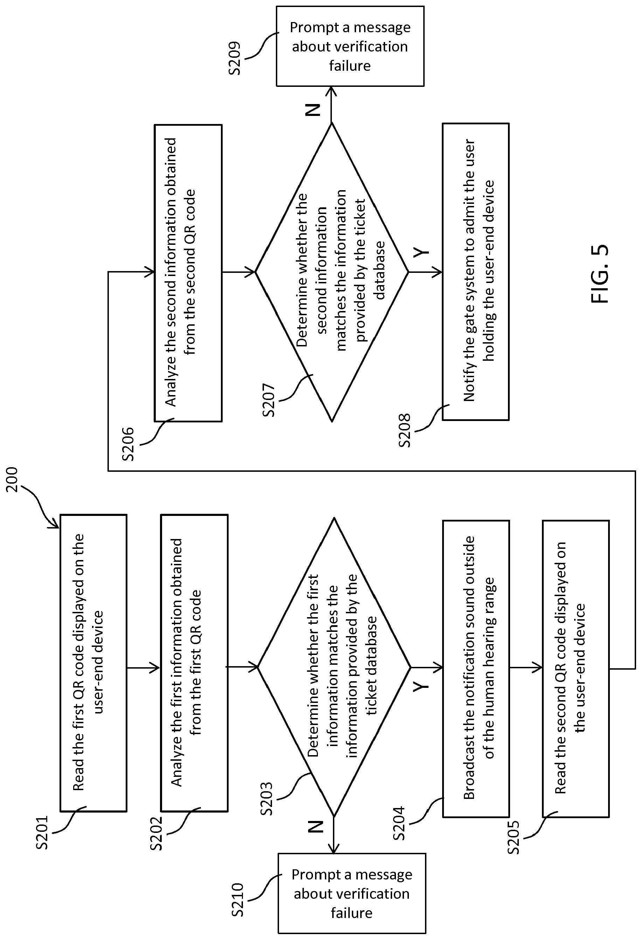

In a step S103, After the user clicks the interface option of admission verification on a human-machine interface of the application 21, the barcode generating module 26 generates the first QR code 27 (QR-codel) for first verification according to the first information including the ticket identifier, the user identifier and the time factor, and displays the first QR code 27 (QR-codel) on the display screen of the user-end device 20. In a step S104, in response to a step S204 performed in the system end as shown in FIG. 5, the audio analyzing module 25 verifies the first QR code 27 (QR-codel) displayed on the display screen, to enable the sound receiving device of the user-end device 20 to receive the notification sound broadcast by the sound broadcasting device 16 and then analyze the notification sound, so as to determine whether the analyzed frequency range matches a preset frequency range condition, for example, the preset frequency range condition is an A frequency range outside of the human hearing range. After the audio analyzing module 25 receives and analyzes the sound and determines that the frequency range of the analyzed sound is within the A frequency range, it indicates that the notification sound is valid, so the audio analyzing module 25 informs the barcode generating module 26 to generate the second QR code 28 (QR-code2) for second verification. In a step S105, according to the indication of the audio analyzing module 25, the barcode generating module 26 generates the second QR code 28 (QR-code2) for second verification according to the second information for second verification, and displays the second QR code 28 (QR-code2) on the display screen of the user-end device 20, so that the QR-code1 displayed on the display screen is changed to the QR-code2.

In another embodiment of the present invention, the user-end device 20 further comprises one of an acceleration sensor, a proximity sensor, an optical sensor, or a combination thereof, and in the step S104, besides the operation of determining whether the frequency range of the analyzed notification sound matches the preset frequency range condition, the barcode generating module 26 of the user-end device 20 can also be in cooperation with one of the above-mentioned sensors or a combination of above-mentioned sensors, to determine the generation of the second QR code 28 (QR-code2) for second verification. For example, after the frequency range of the analyzed notification sound matches the preset frequency range condition, the user-end device 20 can determine, by using the acceleration sensor, whether the display screen of the user-end device 20 is kept downwardly facing the reader 12 for scanning the QR code; or the user-end device 20 can determine, by using the proximity sensor, whether the user-end device 20 continuously approaches the reader 12; or the user-end device 20 can determine, by using the optical sensor, whether the user-end device 20 leaves from the reader 12. After the user-end device 20 determines that the frequency range of the analyzed notification sound matches the preset frequency range condition, and determines, by using at least one of the sensors, that the user-end device 20 is kept downwardly facing, continuously approaches the reader 12, and/or does not leave from the reader 12, the barcode generating module 26 generates the second QR code 28 (QR-code2) for the second verification and displays the second QR code 28 on the display screen of the user-end device 20 for the reader 12 to scan.

Furthermore, in different embodiments, the audio file broadcast by the sound broadcasting device 16 can be a mixture of multiple frequency ranges, and the preset frequency range condition includes the multiple frequency ranges, and after the audio analyzing module 25 receives and analyzes the notification sound, only the notification sound including the preset frequency ranges is valid, for example, in a condition that the to-be-broadcast audio file includes A, B, C, and D frequency ranges outside of the human hearing range, after the audio analyzing module 25 receives and analyzes the notification sound, and determines that the frequency range of the analyzed notification sound includes the A, B, C, and D frequency ranges, it indicates that the received notification sound is valid, so the barcode generating module 26 generates the QR-code1 to replace the QR-code2. The system and the method of the present invention can use the audio file including the mixture of more frequency ranges, to improve security of admission verification, and increase difficulty of recopying and cracking the audio file.

Please refer to FIG. 3, which is a block diagram of a system application of a system end of the present invention. FIG. 1C is taken as an example for illustration. As shown in FIG. 3, the admission determination device 11 can execute the system application 30 to implement modules including a barcode analyzing module 31, a comparison module 32, and an audio broadcasting module 33. Please also refer to FIG. 5, which shows a flowchart of an electronic ticket admission validation anti-counterfeiting method applied in the system end of the present invention. The method 200 applied in the system end of the present invention includes following steps S201 to S210. In a step S201, in response to the step S103 of the client shown in FIG. 4, the barcode analyzing module 31 drives the reader 12 to read the first QR code 27 (QR-codel) displayed on the user-end device 20. In a step S202, the barcode analyzing module 31 analyzes the first QR code 27 (QR-codel) to obtain the first information, for example, the first information can include one of a ticket identifier, a user identifier and a time factor, or a combination thereof. The user identifier can be used to obtain the ticket identifier stored in the ticket database 14, and the time factor can be used to determine whether the ticket identifier of the first information still is within the time limit. In a step S203, the comparison module 32 determines whether the first information obtained from the first QR code 27 (QR-codel) matches the information, provided by the ticket database 14, for the first comparison. For example, the information can be the ticket identifier stored in the system end. The comparison module 32 can determine whether the time factor of the first information still is within the time limit, and when the first QR code 27 (QR-codel) of the reader 12 is over the setting time, a message about verification failure is prompted in a step S210. When the first information still is within the setting time, the comparison module 32 obtains, according to the user identifier, the ticket identifier stored in the system end from the ticket database 14 and compares the obtained ticket identifier with the ticket identifier of the first information, and when they do not match with each other, the message about verification failure is prompted in the step S210; when they match with each other, a step S204 is then executed.

In the step S204, the comparison module 32 obtains the audio file from the ticket database 14, or selects the corresponding audio file from the plurality of audio files according to the information setting related to the electronic ticket, the audio broadcasting module 33 provides the audio file to the sound broadcasting device 16 to c. In a step S205, in response to the step S105 executed in the client end shown in FIG. 4, the barcode analyzing module 31 drives the reader 12 to read the second QR code 28 (QR-code2) displayed on the user-end device 20. In a step S206, the barcode analyzing module 31 analyzes the second QR code 28 (QR-code2) to obtain the second information, and then obtains, based on the user identifier, the information for the second comparison, from the ticket database 14. In a step S207, the comparison module 32 determines whether the second information obtained from the second QR code 28 (QR-code2) matches the information provided by the ticket database 14 for the second comparison. When the second information does not match the information required for the second comparison, the message about verification failure is prompted in a step S209. When the second information matches the information required for the second comparison, a step S208 is executed. In the step S208, the comparison module 32 notifies the gate system 15 to admit the user holding the user-end device 20.

According to the embodiment of FIG. 1A, in the method 200 applied in the system end, in the steps S202 and S203, the comparison module 32 implemented by the admission determination device 11 executing the system application 30 can provide the first information of the first QR code 27 (QR-codel) to the verification server 13 for performing the first verification, and obtain the first verification result from the verification server 13. The comparison module 32 can execute the step S210 or the S204 according to the first verification result. When the step S204 is executed, the verification server 13 obtains the audio file from the ticket database 14 or selects the corresponding audio file from the audio files according to the information setting related to the electronic ticket in the step 203, and the comparison module 32 also receives the audio file while obtaining the first verification result from the verification server 13, and the audio broadcasting module 33 provides the audio file to the sound broadcasting device 16, so as to broadcast the notification sound outside of the human hearing range. Furthermore, in the step S207, the comparison module 32 provides the second information of the second QR code 28 (QR-code2) to the verification server 13 for performing the second verification, and then obtains the second verification result from the verification server 13. The comparison module 32 executes the step S209 or S208 according to the second verification result.

According to the embodiment of FIG. 1B, in the method 200 applied in the system end, the audio broadcasting module 33 of the system application 30 shown in FIG. 3 can be implemented by the verification server 13. In the step S204, the verification server 13 can obtain the audio file from the ticket database 14, or select the corresponding audio file from the audio files according to the information setting related to the electronic ticket, and the audio broadcasting module 33 then provides the audio file to the sound broadcasting device 16 to broadcast the notification sound outside of the human hearing range. The comparison module 32 implemented by the admission determination device 11 executing the system application 30 provides the same function as the comparison module 32 of the first embodiment of FIG. 1A.

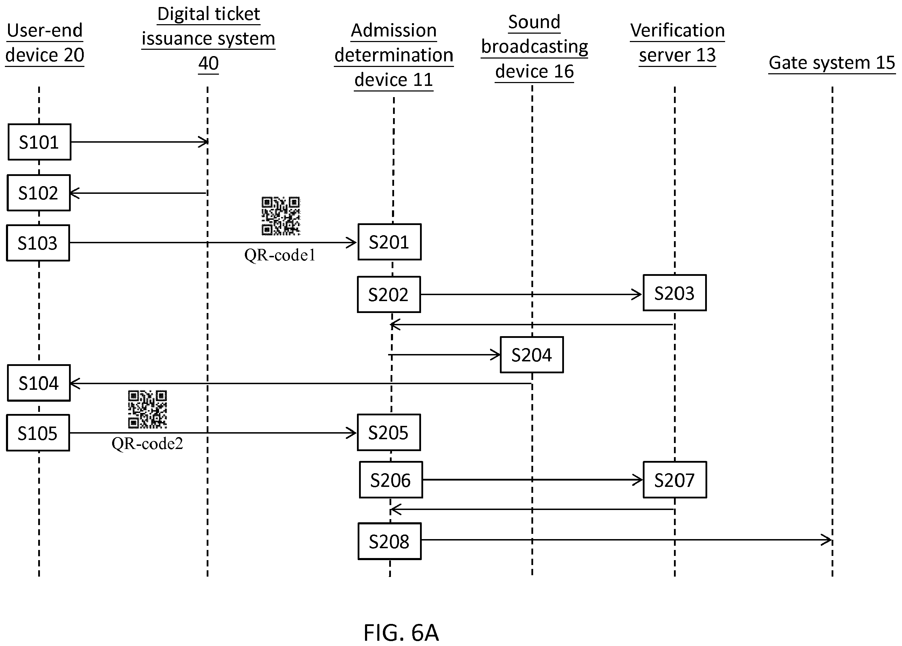

Please refer to FIG. 6A, which is a diagram showing a signal transmission flow of a first embodiment of an electronic ticket admission validation anti-counterfeiting method of the present invention. According to the electronic ticket admission validation anti-counterfeiting method of the first embodiment of the present invention, in the step S101, the user-end device 20 transmits a registration message to the digital ticket issuance system 40, and downloads the ticket identifier from the digital ticket issuance system 40 in the step S102. In the step S103, the user-end device 20 generates the first QR code 27 (QR-codel) for the first verification, and displays the first QR code 27 (QR-codel) on the display screen, so that the admission determination device 11 can read the first QR code 27 (QR-codel) in the step S201, and transmits the first information to the verification server 13 in the step S202. In the step 203, the verification server 13 can perform the first verification comparison and transmit the first verification result back to the admission determination device 11, and when the verification succeeds, the audio file is also transmitted to the admission determination device 11. Next, the admission determination device 11 transmits the audio file to the sound broadcasting device 16. In the step S204, the sound broadcasting device 16 broadcasts the notification sound outside of the human hearing range, and the user-end device 20 receives the notification sound.

Please refer to FIG. 6A, in the step S104, the user-end device 20 receives the notification sound and determines whether the notification sound is valid. In the step S105, when the notification sound is valid, the user-end device 20 generates the second QR code 28 (QR-code2) for the second verification and displays the second QR code 28 (QR-code2) on the display screen for the admission determination device 11 to read the second QR code 28 (QR-code2) in the step S205. In the step S206, the admission determination device 11 transmits the second information to the verification server 13, and in the step 207 the verification server 13 performs the second verification comparison and transmits the second verification result back to the admission determination device 11. In the step S208, the admission determination device 11 transmits the notice message to the gate system 15 according to the second verification result indicative of successful verification, so as to allow admission of the user holding the user-end device 20.

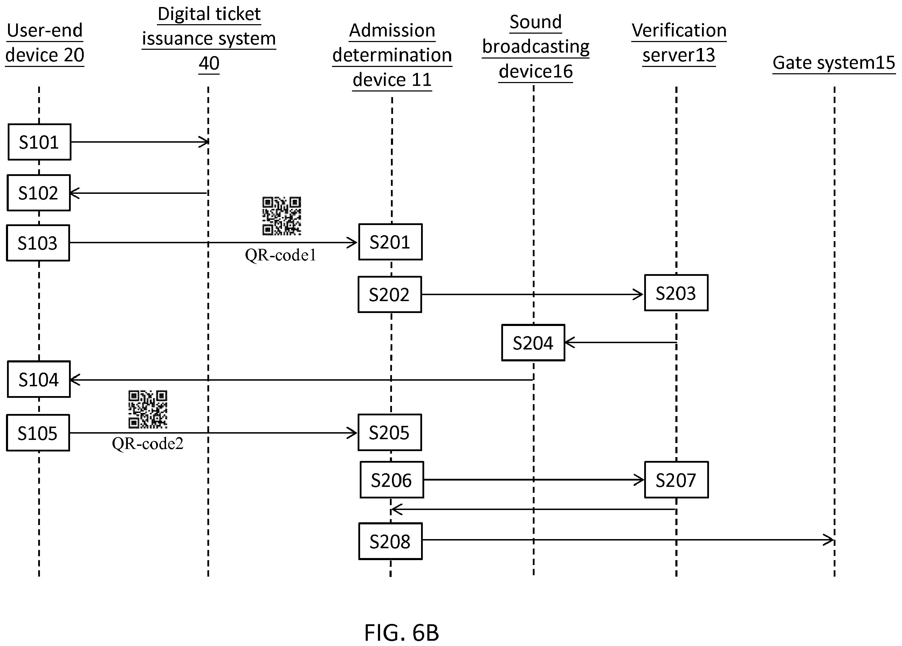

Please refer to FIG. 6B, which is a diagram showing a signal transmission flow of a second embodiment of an electronic ticket admission validation anti-counterfeiting method of the present invention. The difference between the second embodiment of the method of the present invention and the first embodiment of FIG. 6A is that in the second embodiment after the verification server 13 performs the first verification comparison in the step 203, the verification server 13 transmits the audio file to the sound broadcasting device 16 when the verification succeeds. The remaining steps of the second embodiment are the same as that of the first embodiment of FIG. 6A.

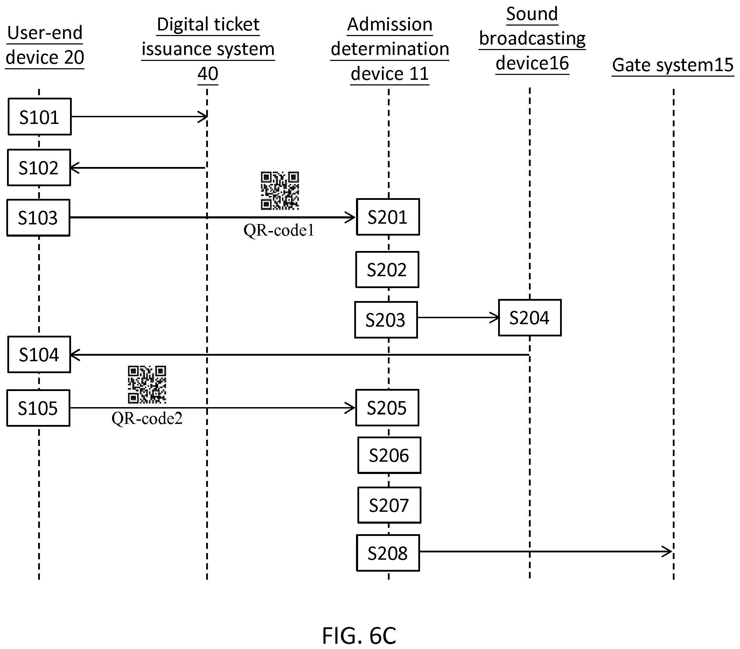

Please refer to FIG. 6C, which is a diagram showing a signal transmission flow of a third embodiment of an electronic ticket admission validation anti-counterfeiting method of the present invention. The difference between the third embodiment of the method of the present invention and the first embodiment of FIG. 6A is that in this third embodiment the admission determination device 11 executes the steps S203 and S207 to perform the first verification comparison and the second verification comparison, respectively. The remaining steps of the third embodiment of the method of the present invention are the same as that of the first embodiment of FIG. 6A.

It should be noted that various equivalent structural changes, alternations or modifications based on descriptions and figures of different embodiments of the present invention are all consequently viewed as being embraced by the spirit and the scope of the present disclosure set forth in the claims. For example, the user-end device can generate the first QR code 27 (QR-codel) based on the user identifier and displays the first QR code 27 (QR-code1), and after the sound receiving device of the user-end device receives the notification sound, the user-end device can generate the second QR code 28 (QR-code2) based on the ticket identifier and display the second QR code 28 (QR-code2). When the user reaches the entrance of the site, the admission determination device 11 can scan and analyze the first QR code 27 (QR-codel) to obtain the first information, and determine, according to the first information, whether to instruct the sound broadcasting device to broadcast the notification sound, and the sound receiving device of the user-end device can receive the notification sound, and then scan and analyze the second QR code 28 (QR-code2) to obtain the second information, and determine, according to the second information, whether to admit the user holding the user-end device.

The present invention disclosed herein has been described by means of specific embodiments. However, numerous modifications, variations and enhancements can be made thereto by those skilled in the art without departing from the spirit and scope of the disclosure set forth in the claims.

## Claims

1. An electronic ticket admission verification anti-counterfeiting system, comprising:
a ticket database configured to store at least one ticket identifier, wherein the at least one ticket identifier is downloaded and stored to a user-end device comprising a display screen and a sound receiving device;
at least one admission determination device comprising a sound broadcasting device and a barcode reader, wherein the barcode reader is configured to sequentially scan a first QR code and a second QR code displayed on the display screen of the user-end device, and when the admission determination device analyzes that the first QR code is valid, the admission determination device controls the sound broadcasting device to broadcast a notification sound, and then analyzes the second QR code to determine whether to admit a user holding the user-end device;
wherein the first QR code or the second QR code is associated with the ticket identifier encrypted, and the second QR code is generated after the sound receiving device of the user-end device receives the notification sound, and the first QR code is different from the second QR code.

2. The electronic ticket admission verification anti-counterfeiting system according to claim 1, wherein the notification sound broadcasted by the sound broadcasting device is selected from one of a plurality of audio files, and the plurality of audio files are stored in the ticket database or the sound broadcasting device.

3. The electronic ticket admission verification anti-counterfeiting system according to claim 1, further comprising a gate system, wherein when the admission determination device analyzes that the second QR code is valid, the user holding the user-end device is admitted and the admission determination device notifies the gate system to allow the user to enter.

4. The electronic ticket admission verification anti-counterfeiting system according to claim 1, wherein the notification sound comprises a frequency range outside of a human hearing range, and the notification sound comprises single frequency range or a plurality of frequency ranges.

5. The electronic ticket admission verification anti-counterfeiting system according to claim 1, wherein the user-end device further comprises one of an acceleration sensor, a proximity sensor, an optical sensor or a combination thereof, and when the user-end device analyzes that the frequency range of the notification sound matches a preset frequency range condition, and a determination result of one of the acceleration sensor, the proximity sensor, the optical sensor or the combination thereof matches a preset condition, the user-end device generates and displays the second QR code on the display screen.

6. An electronic ticket admission validation anti-counterfeiting method, comprising:
scanning a first QR code displayed on a display screen of a user-end device;
analyzing first information obtained from the first QR code;
comparing the first information to information provided by a ticket database, to determine whether to broadcast an audio file to generate a notification sound;
scanning a second QR code displayed on the display screen of the user-end device, wherein the second QR code is generated after the sound receiving device of the user-end device receives the notification sound, and the first QR code or the second QR code is associated with a ticket identifier stored in the user-end device;
analyzing second information obtained from the second QR code;
comparing the second information to information stored in the ticket database, to determine whether to admit a user holding the user-end device.

7. The electronic ticket admission validation anti-counterfeiting method according to claim 6, further comprising:
selecting one of the plurality of audio files, to enable the sound broadcasting device to broadcast the notification sound outside of a human hearing range according to the selected audio file.

8. The electronic ticket admission validation anti-counterfeiting method according to claim 6, wherein the first QR code and the second QR code displayed on the display screen are set with timeliness.

9. An electronic ticket admission verification anti-counterfeiting system, comprising:
a ticket database configured to store at least one ticket identifier, wherein the at least one ticket identifier is downloaded and stored to a user-end device comprising a display screen and a sound receiving device; and
at least one admission determination device comprising a sound broadcasting device and a barcode reader, wherein the barcode reader is configured to sequentially scan a first QR code and a second QR code displayed on the display screen of the user-end device, the at least one admission determination device is configured to analyze the first QR code to determine whether to instruct the sound broadcasting device to broadcast a notification sound, and then analyze the second QR code to determine whether to admit a user holding the user-end device;
wherein the second QR code is associated with the ticket identifier encrypted, and the second QR code is generated and displayed on the display screen after the sound receiving device of the user-end device receives the notification sound, and the first QR code is different from the second QR code.
